# EUROPEAN PATENT SPECIFICATION

(11) **EP 1 677 163 B1**
(45) Date of publication and mention of the grant of the patent: **02.09.2009**
(21) Application number: 05022692.7
(22) Date of filing: 18.10.2005
(51) Int. Cl.: H04N 1/028, G03G 15/04

(54) **A document illuminating apparatus, a document reading apparatus and an image forming apparatus capable of efficiently cooling with compact size**
Dokumentbeleuchtungsvorrichtung, Dokumentlesevorrichtung und Bilderzeugungsvorrichtung mit effizienter Kühlung und kompakter Größe
Appareil d'éclairage de documents, appareil de lecture de documents et appareil de formations d'images capables de refroidir rapidement malgré une taille compacte

(30) Priority: 18.10.2004 JP 2004303165; 21.10.2004 JP 2004307395; 27.04.2005 JP 2005130586; 12.08.2005 JP 2005235076
(43) Date of publication of application: 05.07.2006
(73) Proprietor: Ricoh Company, Ltd., Tokyo 143-8555 (JP)
(72) Inventor: Mikajiri, Susumu, c/o Ricoh Company, Ltd., Tokyo 143-8555 (JP); Hideaki, Matsui, c/o Ricoh Company, Ltd., Tokyo 143-8555 (JP)
(74) Representative: Schwabe - Sandmair - Marx

(56) References cited:
- EP-A2- 0 901 272
- DE-A1- 10 249 208
- US-A- 3 532 424
- US-A- 3 947 115
- US-A- 4 092 066
- US-A- 4 095 881
- US-A- 4 939 546
- US-A- 5 075 720
- BAXTER ET AL: "Document Illuminator using Elliptic and Dichroic Reflectors" IP.COM JOURNAL, IP.COM INC., WEST HENRIETTA, NY, US, 1 April 1972 (1972-04-01), XP013065774 ISSN: 1533-0001

## Description

This patent specification is based on Japanese patent applications, No. 2004-303165 filed on Oct 18, 2004, No. 2004-307395 filed on Oct 21, 2004, No. 2005-130586 filed on Apr 27, 2005 and No. 2005-235076 filed on Aug 12, 2005 in the Japan Patent Office.

### FIELD OF THE INVENTION

The present invention relates to a document illumination apparatus, a document reading apparatus and an image forming apparatus, and more particularly to a document illumination apparatus, a document reading apparatus and an image forming apparatus capable of efficiently cooling with compact size during operation.

### DISCUSSION OF THE BACKGROUND

A Background document illumination apparatus is widely used in a document reading apparatus of image forming systems such as copiers and scanners. It is required to illuminate a document with great amount of light so that the document reading apparatus can appropriately read the document. Such a background document illumination apparatuses generally uses a fluorescent lamp as a light source.

The fluorescent lamp is commonly a xenon lamp which has a high emission efficiency with a relatively low power because the xenon lamp has a wider light emitting area and generates greater amount of light, although it has a lower brightness comparing to a halogen lamp.

Relatively large xenon lamp having a size of 10mm in diameter is widely used. An amount of light emission is proportional to an area with fluorescent material coated, therefore, introducing a wider area with fluorescent material coated to a glass tube is effective to increase the amount of light emission. However, this makes the glass tube larger. Accordingly, the document reading apparatuses using large glass becomes larger in the background document illumination apparatus.

The background document illumination apparatus includes high temperature light sources which are heating elements and heats the document illumination apparatus up. Due to the accumulated heat generated by the light sources, durability of the light sources rapidly decreases and components of the document illumination apparatus deteriorate in a short period.

Demands for a compact system have been increasing in a market, however, this heat problem is one of big issues to be solved to obtain a compact document illumination apparatus. In order to make the document illumination apparatuses compact, it has been proposed to introduce more reflection parts to keep a light path. However, usage of many parts such as reflectors for an optical path causes a penalty in keeping accuracy especially on an assembly of the document illumination apparatus.

Thus, there is a strong demand for a downsizing of a document illumination apparatus which is possible to be efficiently cooled down with a compact size during operation.

The objectives defined above are obtained by a document illumination apparatus as claimed in claim 1.

### SUMMARY OF THE INVENTION

This document illumination apparatus includes a first light source configured to emit a bundle of light rays, a first lower reflector configured to reflect the bundle of the light rays emitted from the first light source, a first upper reflector configured to reflect the bundle of light rays reflected at the first lower reflector, to gather the bundle of the light rays and to illuminate directly a document and a first non-reflective area, which is located out of a path of the bundle of the light rays, arranged between the first lower and upper reflectors.

The document illumination apparatus further includes a first opening arranged in the non-reflective area between the first lower and upper reflectors through which air flows.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Fig. 1A illustrates an image forming apparatus having a document illumination apparatus according to the present invention;
Fig. 1B illustrates a magnified view of a relevant part of the document illumination apparatus of Fig. 1A;
Fig. 2 is an illustration of a first running unit 21 of the document illumination apparatus of Fig. 1B;
Fig. 3 is an illustration of another example of a first running unit;
Fig. 4 is an illustration of a first running unit of an embodiment of the present invention;
Fig. 5A shows an oblique perspective view of the first running unit of Fig. 2;
Fig. 5B is a magnified view of the relevant part of the first running unit of Fig. 2;

### DETAILED DESCRIPTION OF PREFERRED EMBODIMENTS

In describing preferred embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner. Referring now to the drawings, wherein like reference numerals designate identical or corresponding parts throughout the several views, a document illumination apparatus according to an embodiment of the present invention is described.

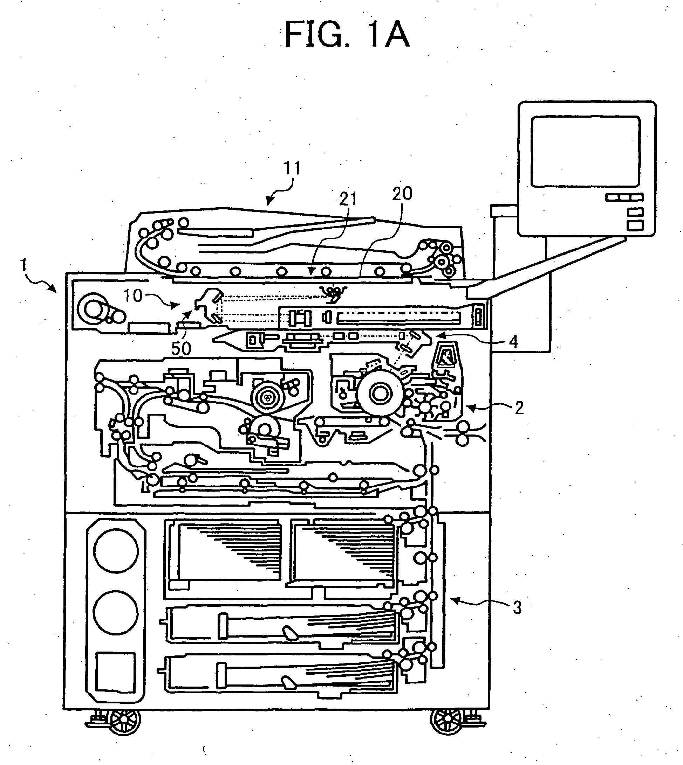

Fig. 1A illustrates an image forming apparatus having a document illumination apparatus of the present invention. The image forming apparatus includes a document reader 1, an image forming unit 2, a paper feed unit 3 and a writing unit 4. The document reader 1 includes a document illumination apparatus 10 and an automatic document feeder (ADF) unit 11. The image forming unit 2 includes necessary units to perform image forming such as a photo conductor 15, a charging unit, a development unit and a transfer unit.

The paper feed unit 3 feeds papers one after another to the image forming unit 2. A document paper is fed to a document table 20 by the ADF unit 11 and is read by the document illumination apparatus 10 arranged underneath of the document table 20. An image information which is read by the document illumination apparatus 10 is detected and is transferred to an electrical signal. The electrical signal is treated with a predetermined image forming manner. As a result, data for an image forming is created from the electrical signal. Based on the data, a laser beam is provided to the photo conductor 15 from the writing unit 4 and forms an electrostatic latent image on the photo conductor 15. At the image forming unit 2, the electrostatic latent image formed on the photo conductor 15 is developed as a toner image by feeding toner from the development unit. The toner image is transferred and fixed on the paper fed from the paper feed unit 3.

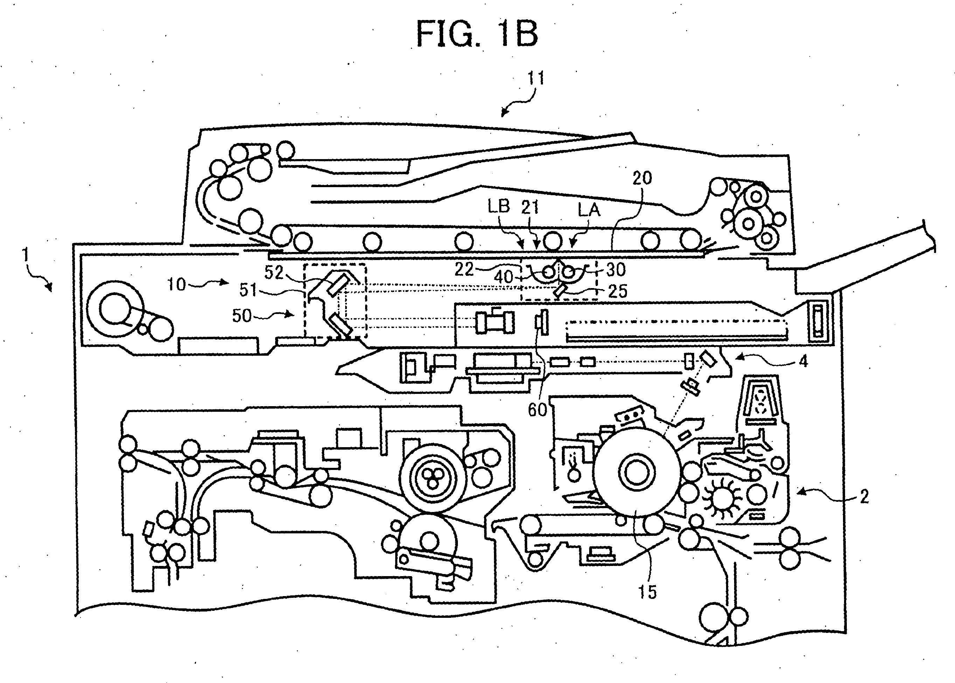

Fig. 1B illustrates a magnified view of a relevant part of the document illumination apparatus 10. The document illumination apparatus 10 includes the document table 20, a first running unit 21 and a second running unit 50 and a reading plate 60. The first and second running unit 21 and 50 is configured to move to a predetermined direction. The reading plate 60 includes a CCD (charge-coupled device) to detect the image of the document.

The first running unit 21 includes a carriage 22, two lamps 30, 40, reflection plates 31, 41 and a mirror 25. The carriage 22 moves on a guide rail (not shown). The lamps 30, 40 are comprised of fluorescent lamp such as a xenon or halogen lamp and are mounted on the carriage 22. The light rays emitted from the lamps are reflected by the reflection plates 31, 41 and illuminate a surface of the document.

The second running unit 50 includes reflecting plates 52 on a carriage 51. The reflecting plates 52 are configured to introduce light rays reflected at the document to a predetermined direction. The light rays go through the mirror 25 and are reflected by the reflecting plates 52 and then form an image of the document at the CCD. The image formed at the CCD is subjected to image processing. Thus, the document illumination apparatus 10 converges the light rays emitted from the lamps 30, 40 by the reflection plates 31, 41. And the document on the document table is illuminated by the light rays.

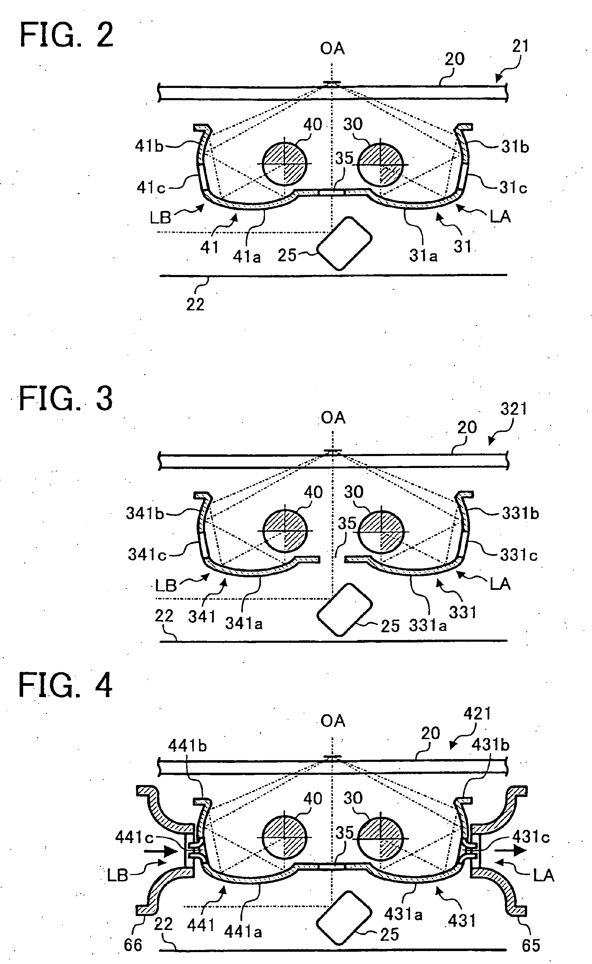

Fig. 2 is an illustration of the first running unit 21 of the document illumination apparatus 10. The first running unit 21 includes a first light source unit LA, a second light source unit LB and the mirror 25. Each light source unit LA, LB, includes lamp 30, 40, a lower reflector 31a, 41a, a upper reflector 31b, 41b respectively. The lower and upper reflector 31a, 31b comprise a reflection plate 31 in the light source unit LA.

The lower and upper reflector 41a, 41b comprise a reflection plate 41 in the light source unit LB. The each lower reflector 31a, 41a reflects the light rays from the each lamp 30, 40, respectively. The each upper reflector 31b, 41b reflects the light rays reflected at the each one of the lower reflectors 31a, 41a and then the light rays illuminate the document to be read. A smooth reflection surface is formed on the each reflector using, for example, chemical polishing method, electrolytic polishing method and surface treatments such as a plating and an alumite treatment with vapor deposition.

The lower and upper reflectors 31a, 31b are integrated in one piece in the light source units LA. Similarly, the lower and upper reflector 41a, 41b are integrated in one piece in the light source units LB. Taking this configuration, it becomes possible to reduce a number of parts and becomes easier and more accurate in the assembly.

Moreover in the light source units LA, a non-reflective area is arranged between the lower reflector 31a and the upper reflector 31b. Therefore, an opening 31C can be formed in the non-reflective area to introduce fresh air for cooling the lamp 30. Similarly, in the light source units LB, a non-reflective area is arranged between the lower reflector 41a and the upper reflector 41b. And an opening 41C can be formed in the non-reflective area to introduce fresh air for cooling the lamp 40. Namely, the non-reflective area contributes to cool the lamps down by introducing fresh air and outputting heated air from the openings while the first running unit 21 is moving in the predetermined running direction.

Additionally, the openings 31c, 41c are arranged at a same height so that the cooling air is smoothly input and heated air is output from the running unit 21 while first running unit 21 moves horizontally in a predetermined running direction. Thus, it is possible to cool the lamps 30, 40 effectively.

In this embodiment, the light source units LA, LB are arranged symmetrically with respect to an optical axis of the light reflected at the document OA. And the reflectors, 31a, 31b, 41a and 41b are formed in one piece. Namely, the lower and the upper reflectors 31a, 41a, are integrated in one piece. Thus in this embodiment, it is possible to achieve a reduction of a number of parts and avoid the occurrence of error during the assembly of the document reading apparatus.

A light opening 35 is formed at a connection part between the first and the second reflectors 31a, 41a so that the reflected light rays pass to a mirror 25 located underneath of the running unit 21. The light opening 35 is configured to have an adequate size so that a flare light incident to the mirror 25 can be avoided.

Fig. 3 is an illustration to explain another embodiment of a first running unit 321. The configuration of the first running unit 321 is similar to the first running unit 21 shown in Fig. 2. A difference from the embodiment shown in Fig. 2 is that a first light source unit LA is separately arranged from a second light source unit LB. The first and the second reflectors 331a, 331b are integrated in one piece in the light source unit LA. The simplicity of this configuration with the integration of the lower and upper reflectors in one piece still provides a variety of merits similar to the embodiment shown in Fig. 2.

Fig. 4 is an illustration to explain an embodiment of a first running unit 421 according to the present invention. The first running unit 421 includes an air duct 65 outside of an opening 431C of a reflection plate 431 and an air duct 66 outside of an opening 441C of a reflection plate 441. Each one of the air ducts 65, 66 has a shape which is extended in a tapered shape. When the first running unit 421 moves in a lateral direction, a cooling air is input the first running unit 421 through a duct and heated air is output through another duct. Namely, the cooling air is blown into the lamps 30, 40 and the hot air heated by the lamps is output from the first running unit 421 in accordance with the movement of the first running unit 421.

As a result, it is possible to avoid problems caused by overheat and heat storage with respect to the first running unit and associated parts. Fig. 4 illustrates an apparatus in which the ducts are attached to the reflecting plates 431, 441 which are integrated in one piece as shown in Fig. 2. However, the ducts are also applicable to other type of reflecting plates, for example, the reflecting plates as shown in Fig. 3.

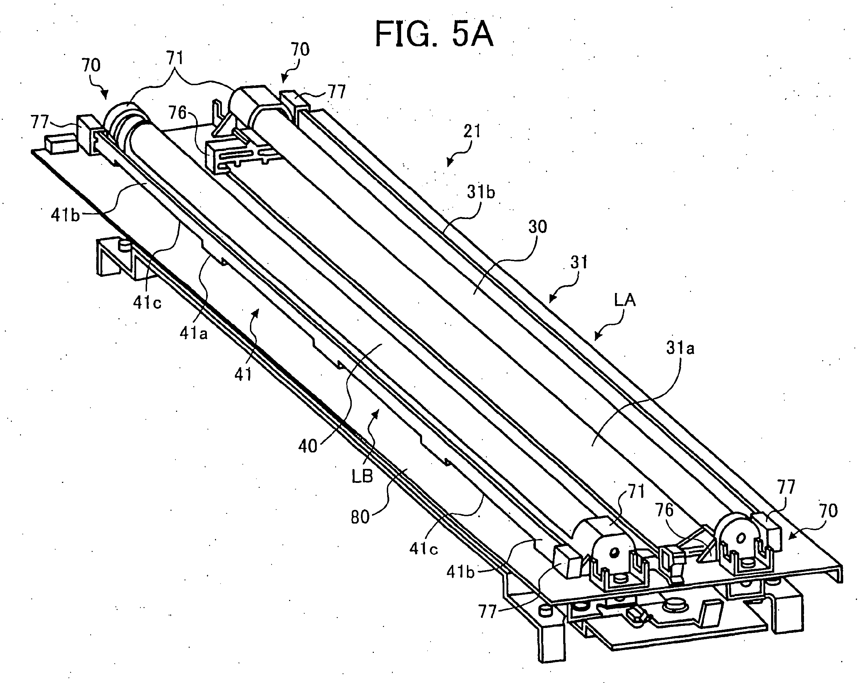

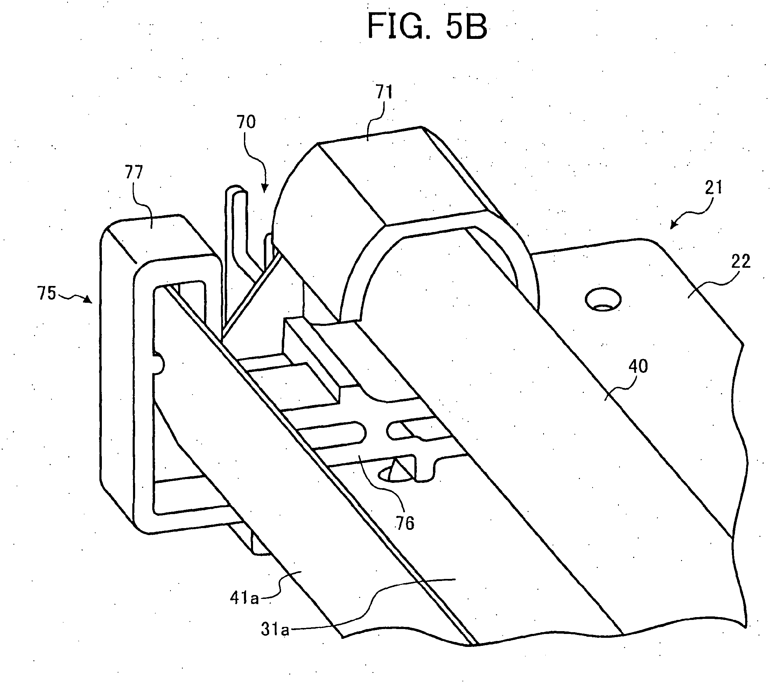

Fig. 5A shows an oblique perspective view of the first running unit 21 which includes two lamps 30, 40. Fig. 5B is a magnified view of the relevant part of the first running unit 21. In this embodiment, the lamps 30, 40 are light sources of strip type lightings having electrodes at their both ends.

A lamp-reflection plate holder 70 which holds the electrodes is mounted on a carriage 22 shown in Fig. 5B. The lamp 40 is held on the carriage 22 and is arranged with a symmetrical positional relationship to the lamp 30. Consequently, the lamps and the reflection plate holders are symmetrically arranged on the carriage 22.

The lamp-reflection plate holder 70 are connected electrically through the electrode arranged at both ends of the lamp 40. The lamp-reflection plate holder 70 further includes a lamp holder 71 and a reflection plate keeper 75 arranged beside the lamp holder 71. The lamp holder 71 engages with the electrodes and holds it mechanically. The lamp holder 71 and the reflection plate keeper 75 are formed in one piece.

The lamp holder 71 includes a main body, terminals and lead wires. The main body is formed with a heat-resisting resin material. The terminals are arranged in the main body and the lead wires are drawn out of the terminals to connect to a power supply. The lamp holder 71 also includes a fixed holder part which fixes the electrode at one side of the lamp and a removable holder part which is arranged at another side of the lamp and are configured to be available to mount and unmount an electrode.

The reflection plate keeper 75 is a holding device which has a removable (or fixable) configuration with the both ends of a long side of the reflection plates 31, 41 and is integrated with the lamp holder 71 in one piece. The reflection plate keeper 75 includes a lower reflector keeper 76 and an upper reflector keeper 77. The lower reflector keeper 76 includes a slot (or a slit) to hold an end of the lower reflector 31a and a slot (or a slit) to hold an end of the upper reflector 41a.

Thus, the lower reflector 31a, 41a are held by the lower reflector keeper 76 at the both ends of the each reflector accurately. Also, the upper reflector 31b, 41b are held by the upper reflector keeper 77 at the both ends of the each reflector accurately. The lower and upper reflector keepers 76, 77 are formed in one piece, moreover, they are integrated with the lamp holder 71 in one piece. For this reason, it is possible to achieve a reduction of a number of parts and avoid an accumulated error caused during assembly steps. Also, cost reduction can be achieved based on the same reason.

To achieve a compact document illumination apparatus, it is important to optimize a positional configuration and determine shapes of the parts for efficiently illuminating the document.

Numerous additional modifications and variations are possible in light of the above teachings. It is therefore to be understood that within the scope of the appended claims, the disclosure of this patent specification may be practiced otherwise than as specifically described herein.

## Claims

1. A document illumination apparatus, comprising:
a first light source (30) configured to emit a bundle of light rays;
a first lower reflector (31a; 331a; 431a) configured to reflect the bundle of the light rays emitted from the first light source (30);
a first upper reflector (31b; 331b; 431b) configured to reflect the bundle of light rays reflected at the first lower reflector (31a; 331a; 431a), to gather the bundle of the light rays and to illuminate directly a document;
a first non-reflective area, which is located out of a path of the bundle of the light rays, arranged between the first lower (31a; 331a; 431a) and upper (31b; 331b; 431b) reflectors
wherein the first non-reflective area includes a first opening (31c; 331c; 431c) arranged in the non-reflective area between the first lower (31a; 331a; 431a) and upper (31b; 331b; 431b) reflectors through which air flows; and
a running unit (21; 221; 321) configured to mount the first light source (30) and the first reflectors and to move horizontally, **characterized in that**
the document illumination apparatus, further comprises
a duct (65) attached to the running unit (21; 321; 421) and configured to input air into the running unit and to output heated air from the running unit (21; 321; 421) when the running unit moves, wherein the duct (65) has a shape which is extended in a tapered shape.

2. The document illumination apparatus of claim 1,
wherein the first lower (31a; 331a; 431a) and upper (31b; 331b; 431b) reflectors are formed in one piece.

3. The document illumination apparatus of claim 1, further comprising:
a second light source (40) configured to emit a bundle of light rays;
a second lower reflector (41a, 341a; 441a) configured to reflect the bundle of the light rays emitted from the second light source (40);
a second upper reflector (41b, 341b; 441b) configured to reflect the bundle of light rays reflected at the second lower reflector (41a, 341a; 441a), to gather the bundle of the light rays and to illuminate directly a document;
a second non-reflective area, which is located out of a path of the bundle of the light rays, arranged between the second lower (41a, 341a; 441a) and upper (41b, 341b; 441b) reflectors.

4. The document illumination apparatus of claim 3,
wherein the second non-reflective area includes an second opening (41c, 341c; 441c) arranged in the second non-reflective area between the second lower (41a, 341a; 441a) and upper (41b, 341b; 441b) reflectors through which air flows.

5. The document illumination apparatus of claim 4,
wherein the running unit (21; 321; 421) is configured to mount the first (30) and second (40) light sources, the first (31a, 331a; 431a) and second (41a, 341a; 441a) lower reflectors, and the first (31b, 331b; 431b) and second upper (41b, 341b; 441b) reflectors.

6. The document illumination apparatus of claim 4,
wherein the first (31c, 331c; 431c) and second (41c, 341c; 441c) openings are arranged substantially at a same vertical position.

7. The document illumination apparatus of claim 3,
wherein the first (30) and second (40) light sources and the first and second reflectors are arranged symmetrically with respect to an optical axis (OA) of the light reflected at the document.

8. The document illumination apparatus of claim 3, further comprising:
a first light source holder (71) configured to hold an electrode of the first light source (30);
a first reflection plate keeper (75) configured to hold a reflection plate (31; 331; 431) which includes the first lower (31a; 331a; 431a) and upper (31b; 331b; 431b) reflectors;
a second light source holder (71) configured to hold an electrode of the second light source (40); and
a second reflection plate keeper (75) configured to hold a reflection plate (41; 341; 441) which includes the second lower (41a; 341a; 441a) and upper (41b; 341b; 441b) reflectors.

9. The document illumination apparatus of claim 8,
wherein the first light source holder (71) and the first reflection plate keeper (75) are formed in one piece.

10. A document reading apparatus or image forming apparatus which employs the document illumination apparatus of one of claims 1 to 9.

## Patentansprüche

1. Dokumentbeleuchtungsvorrichtung, die umfasst:
eine erste Lichtquelle (30), die konfiguriert ist, um ein Lichtstrahlenbündel zu emittieren;
einen ersten unteren Reflektor (31a; 331a; 431a), der konfiguriert ist, um das Lichtstrahlenbündel, das von der ersten Lichtquelle (30) emittiert wird, zu reflektieren;
einen ersten oberen Reflektor (31b; 331b; 431b), die konfiguriert ist, um das Lichtstrahlenbündel, das an dem ersten unteren Reflektor (31a; 331a; 431a) reflektiert wird, zu reflektieren, um das Lichtstrahlenbündel zu sammeln und ein Dokument direkt zu beleuchten;
einen ersten nicht reflektierenden Bereich, der sich außerhalb eines Wegs des Lichtstrahlenbündels befindet und zwischen dem ersten unteren Reflektor (31a; 331a; 431a) und dem ersten oberen Reflektor (31b; 331b; 431b) angeordnet ist;
wobei der erste nicht reflektierende Bereich eine erste Öffnung (31c; 331c, 431c) aufweist, die in dem nicht reflektierenden Bereich zwischen dem ersten unteren Reflektor (31a; 331a; 431a) und dem ersten oberen Reflektor (31b; 331b; 431b) angeordnet ist und durch die Luft strömt; und
eine Laufeinheit (21; 221; 321), die konfiguriert ist, um die erste Lichtquelle (30) und die ersten Reflektoren anzubringen und horizontal zu bewegen, **dadurch gekennzeichnet, dass**
die Dokumentbeleuchtungsvorrichtung ferner umfasst:
ein Rohr (65), das an der Laufeinheit (21; 321; 421) befestigt und konfiguriert ist, um Luft in die Laufeinheit einzugeben und erwärmte Luft von der Laufeinheit (21; 321; 421) auszugeben, wenn sich die Laufeinheit bewegt, wobei das Rohr (65) eine Form hat, die in eine konisch zulaufende Form verlängert ist.

2. Dokumentbeleuchtungsvorrichtung nach Anspruch 1,
wobei der erste untere Reflektor (31a; 331a; 431a) und der erste obere Reflektor (31b; 331b; 431b) einteilig ausgebildet sind.

3. Dokumentbeleuchtungsvorrichtung nach Anspruch 1, die ferner umfasst:
eine zweite Lichtquelle (40), die konfiguriert ist, um ein Lichtstrahlenbündel zu emittieren;
einen zweiten unteren Reflektor (41a, 341a; 441a), der konfiguriert ist, um das Lichtstrahlenbündel, das von der zweiten Lichtquelle (40) emittiert wird, zu reflektieren;
einen zweiten oberen Reflektor (41b, 341b; 441b), der konfiguriert ist, um das Lichtstrahlenbündel, das an dem zweiten unteren Reflektor (41a, 341a; 441a) reflektiert wird, zu reflektieren, um das Lichtstrahlenbündel zu sammeln und ein Dokument direkt zu beleuchten;
einen zweiten nicht reflektierenden Bereich, der sich außerhalb eines Wegs des Lichtstrahlenbündels befindet und zwischen dem zweiten unteren Reflektor (41a, 341a; 441a) und dem zweiten oberen Reflektor (41b, 331b; 441b) angeordnet ist.

4. Dokumentbeleuchtungsvorrichtung nach Anspruch 3,
wobei der zweite nicht reflektierende Bereich eine zweite Öffnung (41c, 341c; 441c) enthält, die in dem zweiten nicht reflektierenden Bereich zwischen dem zweiten unteren Reflektor (41a, 341a; 441a) und dem zweiten oberen Reflektor (41b, 331b; 441b) angeordnet ist und durch die Luft strömt.

5. Dokumentbeleuchtungsvorrichtung nach Anspruch 4,
wobei die Laufeinheit (21; 321; 421) konfiguriert ist, um die erste Lichtquelle (30) und die zweite Lichtquelle (40), den ersten unteren Reflektor (31a; 331a; 431a) und den zweiten unteren Reflektor (41a, 341a; 441a) sowie den ersten oberen Reflektor (31b; 331b; 431b) und den zweiten oberen Reflektor (41b, 331b; 441b) anzubringen.

6. Dokumentbeleuchtungsvorrichtung nach Anspruch 4,
wobei die erste Öffnung (31c; 331c, 431c) und die zweite Öffnung (41c, 341c; 441c) im Wesentlichen in derselben vertikalen Position angeordnet sind.

7. Dokumentbeleuchtungsvorrichtung nach Anspruch 3,
wobei die erste Lichtquelle (30) und die zweite Lichtquelle (40) sowie der erste und der zweite Reflektor symmetrisch in Bezug auf eine optische Achse (OA) des an dem Dokument reflektierten Lichts angeordnet sind.

8. Dokumentbeleuchtungsvorrichtung nach Anspruch 3, die ferner umfasst:
einen ersten Lichtquellenhalter (71), der konfiguriert ist, um eine Elektrode der ersten Lichtquelle (30) zu halten;
einen ersten Reflexionsplattenhalter (75), der konfiguriert ist, um eine Reflexionsplatte (31; 331; 431) zu halten, die den ersten unteren Reflektor (31a; 331a; 431a) und den ersten oberen Reflektor (31b; 331b; 431b) enthält;
einen zweiten Lichtquellenhalter (71), der konfiguriert ist, um eine Elektrode der zweiten Lichtquelle (40) zu halten; und
einen zweiten Reflexionsplattenhalter (75), der konfiguriert ist, um eine Reflexionsplatte (41; 341; 441) zu halten, die den zweiten unteren Reflektor (41a, 341a; 441a) und den zweiten oberen Reflektor (41b, 331b; 441b) enthält.

9. Dokumentbeleuchtungsvorrichtung nach Anspruch 8,
wobei der erste Lichtquellenhalter (71) und der erste Reflexionsplattenhalter (75) einteilig ausgebildet sind.

10. Dokumentlesevorrichtung oder Bilderzeugungsvorrichtung, die die Dokumentbeleuchtungsvorrichtung nach einem der Ansprüche 1 bis 9 verwendet.

## Revendications

1. Appareil d'éclairage de documents, comportant :
une première source lumineuse (30) configurée pour émettre un faisceau de rayons lumineux ;
un premier réflecteur inférieur (31a ; 331a ; 431a) configuré pour réfléchir le faisceau de rayons lumineux émis depuis la première source lumineuse (30) ;
un premier réflecteur supérieur (31b ; 331b ; 431b) configuré pour réfléchir le faisceau de rayons lumineux réfléchi sur le premier réflecteur inférieur (31a ; 331a ; 431a), pour ressembler le faisceau de rayons lumineux et éclairer directement un document ;
une première zone non réfléchissante, qui est située hors d'un trajet du faisceau des rayons lumineux, disposée entre le premier réflecteur inférieur (31a ; 331a ; 431a) et le premier réflecteur supérieur (31b ; 331b ; 431b),
dans lequel la première zone non réfléchissante comprend une première ouverture (31c ; 331c ; 431c) disposée dans la zone non réfléchissante entre les premiers réflecteurs inférieur (31a ; 331a ; 431a) et supérieur (31b; 331b ; 431b) à travers laquelle circule de l'air ; et
une unité mobile (21 ; 221 ; 321) configurée pour monter la première source lumineuse (30) et les premiers réflecteurs et pour se déplacer horizontalement, **caractérisé en ce que**
l'appareil d'éclairage de documents comporte en outre
un conduit (65) fixé à l'unité mobile (21 ; 321 ; 421) et configuré pour entrer de l'air dans l'unité mobile et pour délivrer de l'air chauffé depuis l'unité mobile (21; 321 ; 421) lorsque l'unité mobile se déplace, dans lequel le conduit (65) présente une forme qui s'étend en une forme effilée.

2. Appareil d'éclairage de documents selon la revendication 1, dans lequel les premiers réflecteurs inférieur (31a ; 331a ; 431a) et supérieur (31b ; 331b ; 431b) sont formés d'une seule pièce.

3. Appareil d'éclairage de documents selon la revendication 1, comportant en outre :
une seconde source lumineuse (40) configurée pour émettre un faisceau de rayons lumineux ;
un second réflecteur inférieur (41a ; 341a ; 441a) configuré pour réfléchir le faisceau de rayons lumineux émis depuis la seconde source lumineuse (40) ;
un second réflecteur supérieur (41b ; 341b ; 441b) configurée pour réfléchir le faisceau de rayons lumineux réfléchis sur le second réflecteur inférieur (41a ; 341a ; 441a), pour rassembler le faisceau de rayons lumineux et éclairer directement un document ;
une seconde zone non réfléchissante, qui est situé hors d'un trajet du faisceau de rayons lumineux, disposée entre les seconds réflecteurs inférieurs (41a ; 341a ; 441a) et supérieur (41b ; 341b ; 441b).

4. Appareil d'éclairage de documents selon la revendication 3, dans lequel la seconde zone non réfléchissante comprend une seconde ouverture (41c ; 341c ; 441c) disposée dans la seconde zone non réfléchissante entre les seconds réflecteurs inférieur (41a ; 341a ; 441a) et supérieur (41b ; 341b ; 441b) à travers laquelle de l'air circule.

5. Appareil d'éclairage de documents selon la revendication 4, dans lequel l'unité mobile (21 ; 321 ; 421) est configurée pour monter les première (30) et seconde (40) sources lumineuses, les premier (31a ; 331a ; 431a) et second (41a ; 341a ; 441a) réflecteurs inférieurs et les premier (31b ; 331b ; 431b) et second (41b ; 341b ; 441b) réflecteurs.

6. Appareil d'éclairage de documents selon la revendication 4, dans lequel les première (31c ; 331c ; 431c) et seconde (41c ; 341c ; 441c) ouvertures sont disposées sensiblement en une même position verticale.

7. Appareil d'éclairage de documents selon la revendication 3, dans lequel les première (30) et seconde (40) sources lumineuses et les premier et second réflecteurs sont disposés symétriquement par rapport à un axe optique (OA) de la lumière réfléchie sur le document.

8. Appareil d'éclairage de documents selon la revendication 3, comportant en outre :
un premier support de source lumineuse (71) configuré pour supporter une électrode de la première source lumineuse (30) ;
un premier élément de maintien de plaque de réflexion (75) configuré pour supporter une plaque réfléchissante (31 ; 331; 431) qui comprend les premiers réflecteurs inférieur (31a ; 331a ; 431a) et supérieur (31b; 331b ; 431b) ;
un second support de source lumineuse (71) configuré pour supporter une électrode de la seconde source lumineuse (40) ; et
un second élément de maintien de plaque réfléchissante (75) configuré pour supporter une plaque réfléchissante (41 ; 341; 441) qui comprend les seconds réflecteurs inférieur (41a ; 341a ; 441a) et supérieur (41b; 341b ; 441b).

9. Appareil d'éclairage de documents selon la revendication 8, dans lequel le premier support de source lumineuse (71) et le premier élément de maintien de plaque réfléchissante (75) sont formés d'une seule pièce.

10. Appareil de lecture de documents ou appareil de formation d'images qui utilise l'appareil d'éclairage de documents selon l'une des revendications 1 à 9.
